# FASCICULE DE BREVET EUROPEEN

(11) **EP 3 493 459 B1**
(45) Date de publication et mention de la délivrance du brevet: **20.01.2021**
(21) Numéro de dépôt: 18306570.5
(22) Date de dépôt: 26.11.2018
(51) Int. Cl.: H04L 9/08, H04L 29/06

(54) **PROCÉDÉ DE PARTAGE D'UNE CLÉ SERVANT À DÉRIVER DES CLÉS DE SESSION POUR CRYPTER ET AUTHENTIFIER DES COMMUNICATIONS ENTRE UN OBJET ET UN SERVEUR**
VERFAHREN ZUR GEMEINSAMEN BENUTZUNG EINES SCHLÜSSELS, DER ZUR ABLEITUNG VON SESSION-SCHLÜSSELN ZUM VERSCHLÜSSELN UND AUTHENTIFIZIEREN VON KOMMUNIKATIONEN ZWISCHEN EINEM OBJEKT UND EINEM SERVER DIENT
METHOD FOR SHARING A KEY USED TO DIVERT SESSION KEYS FOR ENCRYPTING AND AUTHENTICATING COMMUNICATIONS BETWEEN AN OBJECT AND A SERVER

(30) Priorité: 01.12.2017 FR 1761505
(43) Date de publication de la demande: 05.06.2019
(73) Titulaire: Idemia Identity & Security France, 92400 Courbevoie (FR)
(72) Inventeur: BRINGER, Julien, 92400 COURBEVOIE (FR); BOUATOU, Vincent, 92400 COURBEVOIE (FR)
(74) Mandataire: Regimbeau

(56) Documents cités:
- Jaehyu Kim ET AL: "A Dual Key-Based Activation Scheme for Secure LoRaWAN", , 28 avril 2017 (2017-04-28), XP055416927, DOI: 10.1155/2017/6590713 Extrait de l'Internet: URL:http://downloads.hindawi.com/journals/ wcmc/aip/6590713.pdf [extrait le 2017-10-18]
- NAOUI SARRA ET AL: "Trusted Third Party Based Key Management for Enhancing LoRaWAN Security", 2017 IEEE/ACS 14TH INTERNATIONAL CONFERENCE ON COMPUTER SYSTEMS AND APPLICATIONS (AICCSA), IEEE, 30 octobre 2017 (2017-10-30), pages 1306-1313, XP033330036, DOI: 10.1109/AICCSA.2017.73
- ARAS EMEKCAN ET AL: "Exploring the Security Vulnerabilities of LoRa", 2017 3RD IEEE INTERNATIONAL CONFERENCE ON CYBERNETICS (CYBCON), IEEE, 21 juin 2017 (2017-06-21), pages 1-6, XP033126677, DOI: 10.1109/CYBCONF.2017.7985777

## Description

### DOMAINE DE L'INVENTION

La présente invention se rapporte au domaine des objets connectés.

L'invention concerne tout particulièrement un procédé de partage d'une clé servant à dériver des clés de session pour crypter et authentifier des communications entre un objet et un serveur.

L'invention trouve avantageusement application dans des réseaux d'objets connectés conformes à la spécification LoRaWAN®.

### ETAT DE LA TECHNIQUE

La spécification LoRaWAN définit un protocole de communication pour un réseau d'objets connectés. Dans un tel réseau, un objet (parfois appelé terminal ou « end-device » en anglais) est amené à communiquer avec un serveur faisant partie d'un tel réseau.

La spécification LoRaWAN version 1 propose d'utiliser deux clés de session NwkSKey, AppSKey pour crypter et authentifier des communications entre l'objet et le serveur.

Par ailleurs, les clés de session NwkSKey, AppSKey doivent être dérivées d'une clé d'application AppKey, lorsque cet objet envoie au serveur une requête d'adhésion à un réseau d'objets connectés. Chaque objet dispose de sa propre clé d'application AppKey. Cette clé d'application AppKey est fournie par un fournisseur d'application.

Une contrainte importante est que la clé d'application AppKey doit être un secret partagé entre l'objet et le serveur.

Pour que cette contrainte soit respectée, la spécification LoRaWAN propose de précharger une valeur de clé d'application AppKey dans une mémoire de l'objet, au cours d'une étape de configuration de l'objet réalisée avant sa mise en service. Une telle étape de préchargement est par exemple mise en œuvre dans le document de Jaehyu Kim et Al : "a dual key-based activation scheme for secure LoRaWAN".

Un tel pré-chargement est toutefois contraignant. En effet, on ne connaît pas forcément, au moment où cette étape de configuration est mise en œuvre, avec quel serveur l'objet sera amené à communiquer une fois mis en service.

### EXPOSE DE L'INVENTION

Un but de l'invention est de partager une clé entre un objet connecté et un serveur d'un réseau d'objets connectés d'une manière moins contraignante tout en étant sécurisée.

Il est ainsi proposé, selon un premier aspect de l'invention, un procédé de partage d'une clé de référence entre un objet susceptible d'être connecté à un réseau d'objets connectés et au moins un selon la revendication 1.

Le procédé selon le premier aspect de l'invention, peut comprendre les caractéristiques optionnelles suivantes, prises seules ou en combinaison lorsque cela est techniquement possible.

Le procédé peut comprendre par ailleurs des étapes d'application, par l'objet, d'une deuxième fonction prédéterminée à une deuxième donnée et à la clé de référence, de sorte à générer un code d'intégrité, et de transmission au serveur du code d'intégrité généré. Dans ce cas, la génération par le serveur de la clé propre à l'élément sécurisé comprend les étapes suivantes :
- pour au moins une clé d'élément sécurisé candidate mémorisée par le serveur :
   a) application de la première fonction prédéterminée à la première donnée transmise dans la requête d'adhésion et à une clé d'élément sécurisé candidate mémorisée par le serveur, de sorte à générer une clé de référence candidate),
   b) application de la deuxième fonction prédéterminée à la deuxième donnée transmise dans la requête d'adhésion et à la clé de référence candidate générée), de sorte à générer un code d'intégrité candidat),
- sélection d'une clé de référence candidate ayant servi à générer un code d'intégrité candidat égal au code d'intégrité relatif à la requête d'adhésion.

Le procédé peut comprendre par ailleurs : l'application, par l'objet, d'une troisième fonction prédéterminée à un identifiant unique de l'élément sécurisé de l'objet et à une donnée d'aléa ayant une valeur comprise dans un ensemble fini prédéterminé, de sorte à générer un nonce ; la transmission du nonce au serveur ; pour au moins un identifiant unique d'élément sécurisé candidat et pour au moins une valeur candidate de l'ensemble fini prédéterminé, l'application de la troisième fonction prédéterminée à l'identifiant candidat et à la valeur candidate, de sorte à générer un nonce candidat ; et la sélection d'au moins une clé d'élément sécurisé candidate associée, dans une table de correspondance, à un identifiant candidat ayant servi à générer un nonce candidat égal au nonce transmis dans la requête d'adhésion, dans lequel l'étape a) est mise en œuvre uniquement pour chaque clé d'élément sécurisé candidate sélectionnée.

La donnée d'aléa peut être un compteur incrémenté par l'objet pour chaque nouvelle requête d'adhésion.

La troisième fonction peut comprendre une fonction de hachage prenant en entrée l'identifiant de l'élément sécurisé de l'objet et la donnée d'aléa, suivie d'une troncature.

Le nonce peut être une donnée DevNonce conforme à la spécification LoRaWAN et/ou être incluse dans la requête d'adhésion.

La génération de la clé propre à l'élément sécurisé par le serveur peut comprendre des étapes de : identification, dans une première table de correspondance, d'un identifiant d'élément sécurisé associé à la première donnée transmise dans la requête d'adhésion, et identification, dans une deuxième table de correspondance distincte de la première table de correspondance, d'une clé associée à l'identifiant unique d'élément sécurisé identifié dans la première table de correspondance.

La requête d'adhésion peut être un message conforme à la spécification LoRaWAN.

La première donnée peut être ou dépendre d'au moins une des données suivantes : un identifiant unique propre à l'objet, un identifiant d'application unique propre à un fournisseur d'application de l'objet, un nonce.

La clé de référence peut servir à dériver des clés de session pour crypter et authentifier des communications entre l'objet et le serveur ou sert à partager une autre clé entre l'objet et le serveur.

Il est également proposé, selon un deuxième aspect de l'invention, un système selon la revendication 9.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre de façon schématique un système comprenant un objet et un serveur pour réseau d'objets connectés, selon un mode de réalisation ;
- Les figures 2 et 3 illustrent des étapes d'un procédé de partage d'une clé entre l'objet et le serveur illustrés sur la figure 1, selon un mode de réalisation de l'invention.

Sur l'ensemble des figures, les éléments similaires portent des références identiques.

### DESCRIPTION DETAILLEE DE L'INVENTION

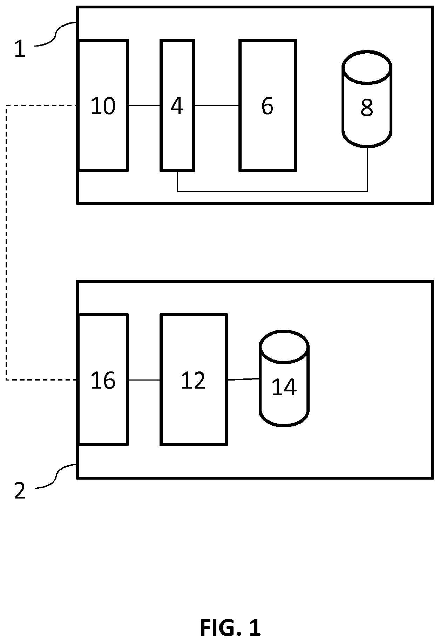

On a schématiquement représenté **en** **figure 1** un objet 1 susceptible d'être connecté à un réseau d'objets connectés via un serveur 2.

L'objet 1 comprend un élément sécurisé 4, au moins un processeur 6, au moins une mémoire 8 et une interface de communication 10 avec le serveur 2.

Le processeur 6 est configuré pour exécuter des programmes d'ordinateur, et en particulier une première fonction f, voire une deuxième fonction g et une troisième fonction h qui seront détaillées dans la suite.

L'élément sécurisé 4 peut être un circuit physique dédié. Ce circuit dédié peut être amovible, par exemple au format UICC. Alternativement, l'élément sécurisé 4 est virtuel, dans le sens où il est formé par un programme d'ordinateur spécifique susceptible d'être exécuté par le processeur 6 de l'objet 1.

L'interface de communication 10 est par exemple du type radio sans fil.

Dans ce qui suit, on prendra l'exemple d'une interface de communication 10 destinée à émettre ou recevoir des messages conformes à la spécification LoRaWAN®, auquel cas le réseau d'objets connecté est un réseau également conforme à cette spécification LoRaWAN.

L'élément sécurisé 4 mémorise une clé KSE qui lui est propre.

L'élément sécurisé 4 dispose par ailleurs d'un identifiant unique IDSE qui lui est propre.

Par ailleurs, la mémoire 8 de l'objet 1 comprend au moins une mémoire non volatile et destinée à stocker des données de calcul de manière persistante (HDD, SSD, Flash, etc.), en particulier les données suivantes définies par la spécification LoRaWAN version 1 :
- DevEUI : un identifiant unique propre à l'objet 1, assimilable à un numéro de série.
- AppEUI : un identifiant d'application unique propre à un fournisseur d'application de l'objet 1. Il permet de classer différents objets tels que l'objet 1 par application.

Le serveur 2 comprend au moins un processeur 12, au moins une mémoire 14 et une interface de communication 16 avec au moins un objet 1 tel que l'objet 1 représenté en figure 1.

Le processeur 12 du serveur 2 est également configuré pour exécuter des programmes d'ordinateur, et en particulier la première fonction f, voire la deuxième fonction g et la troisième fonction h précitées.

La mémoire 14 du serveur 2 comprend au moins une mémoire non volatile et destinée à stocker des données de calcul de manière persistante (HDD, SSD, Flash, etc.), en particulier des tables de correspondances dont le contenu sera détaillé dans la suite.

L'interface de communication 16 est configurée pour interagir avec l'interface de communication 10 de l'objet 1 ; elle est par conséquent du même type.

Pour que l'objet 1 et le serveur 2 puissent communiquer l'un avec l'autre de manière sécurisée, au moins une clé de référence doit être partagée entre le client et le serveur.

La clé de référence sert par exemple à dériver des clés de session pour crypter et authentifier des communications entre l'objet 1 et le serveur.

Lorsque le réseau d'objets connectés est le réseau LoRaWAN version 1, cas non limitatif que l'on prendra en exemple dans la suite, cette clé de référence est la clé d'application AppKey, laquelle permet de dériver les clés de session NwkSKey, AppSKey lesquelles permettent de crypter et authentifier des communications entre l'objet 1 et le serveur 2.

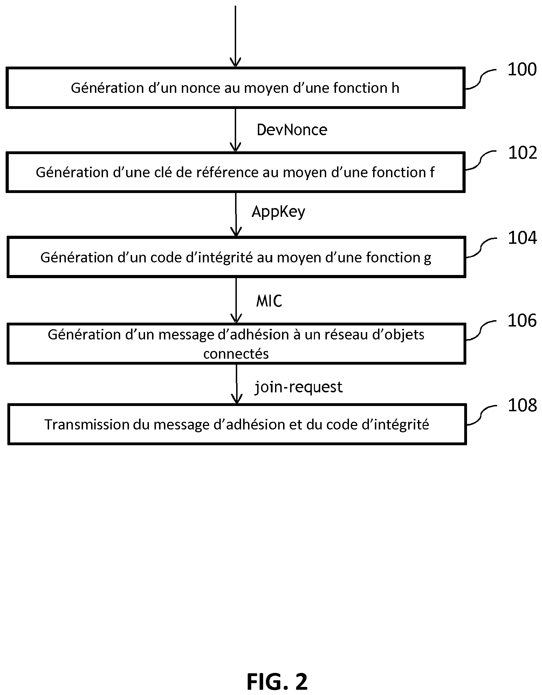

En référence à la figure 2, un procédé de partage d'une clé de référence AppKey entre l'objet 1 et le serveur 2 selon un premier mode de réalisation comprend les étapes suivantes.

Le processeur 6 de l'objet 1 génère un nonce (étape 100). Ce nonce est destiné à être passé en paramètre d'une requête d'adhésion à un réseau d'objets connectés, transmise par l'objet 1 au serveur 2. Le serveur 2 garde trace de certaines valeurs de ce nonce utilisées par l'objet 1 par le passé, et ignore toute requête d'adhésion qui réutiliserait l'une de ces valeurs, de manière à assurer une protection contre des attaques par rejeu.

Ce nonce est la donnée DevNonce définie dans la spécification LoRaWAN. Il est codé sur deux octets.

Par ailleurs, l'objet 1 applique la première fonction f à au moins une première donnée, et à la clé KSE propre à l'élément sécurisé 4 de l'objet 1, de sorte à générer une clé de référence AppKey (étape 102).

Cette étape 102 peut être mise en œuvre par le processeur 6 de l'objet 1, mais est de préférence mise en œuvre par l'élément sécurisé 4 de façon à éviter que la clé KSE n'ait pas à être extraite hors de cet élément sécurisé 4.

La première donnée peut être l'une des données suivantes définies par la spécification LoRaWAN : DevEUI ou AppEUI (préalablement mémorisées dans la mémoire de l'objet 1) bien ou DevNonce (nonce calculé au cours de l'étape 100).

Au cours de sa durée de vie, l'objet 1 peut être amené à contenir différents éléments sécurisés. Par exemple, lorsque l'élément sécurisé 4 se présente sous la forme d'un circuit physique amovible, ce circuit peut être remplacé. La génération 102 de la clé AppKey par l'objet 1 connecté peut ainsi être mise en œuvre à chaque fois qu'un nouvel élément sécurisé est inclus dans l'objet 1 connecté, c'est-à-dire à chaque fois que la clé passée en entrée de la première fonction change au sein de l'objet 1.

En particulier, l'identifiant AppEUI peut être amené à évoluer au cours du cycle de vie de l'objet, par exemple si l'objet 1 change de propriétaire et/ou de serveur associé.

Le processeur 6 de l'objet 1 génère par ailleurs une requête d'adhésion à un réseau d'objets connectés (étape 106).

La requête d'adhésion est un message join-request conforme à la spécification LoRaWAN. Le message join-request comprend alors, de manière conventionnelle, les données suivantes : DevEUI, AppEUI et DevNonce. Par conséquent, la première donnée, ayant servi à calculer la clé de référence AppKey et étant susceptible d'être l'une des trois données qui précèdent, est incluse dans la requête d'adhésion.

L'objet 1 génère par ailleurs un code d'intégrité MIC relatif à la requête d'adhésion (étape 102). Ce code d'intégrité MIC a pour but d'authentifier la requête d'adhésion auprès d'un destinataire, autrement dit, de permettre à un tel destinataire de vérifier si la requête d'adhésion a été émis par un objet 1 agréé et si les données contenues dans la requête d'adhésion sont cohérentes.

Le code d'intégrité MIC est généré par application de la deuxième fonction g à à l'une des données comprises dans la requête d'adhésion générée et à la clé de référence AppKey (étape 104).

Cette donnée, dite dans la suite deuxième donnée, peut en particulier être la première donnée, ou bien distincte de la première donnée.

La deuxième fonction g est par exemple une fonction de chiffrement AES.

La requête d'adhésion est transmise par l'interface de communication au serveur 2 (étape 108). Le code d'intégrité MIC est également transmis au serveur 2.

Dans le cas du réseau LoRaWAN, le message join-request est encapsulé par le processeur 6 dans un message MAC, de même que le code d'intégrité MIC, avant leur envoi au serveur. Le message MAC est typiquement relayé au serveur 2 par un opérateur (LoRa Network Operator).

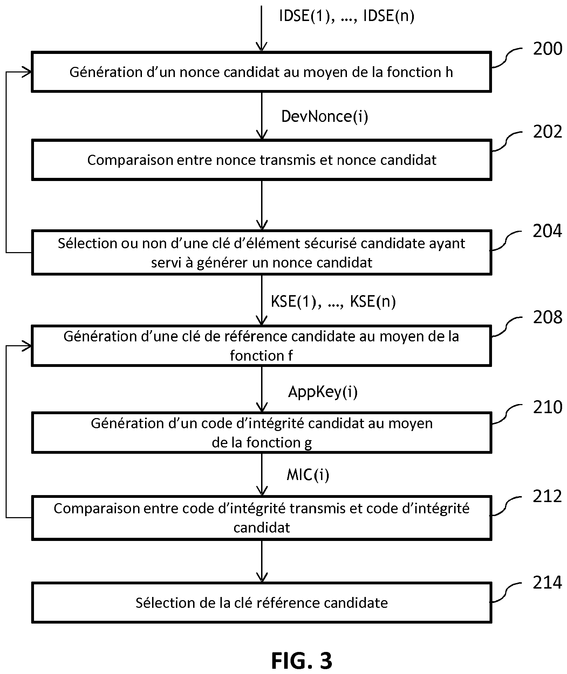

En référence à la **figure 3****,** la requête d'adhésion est reçue par l'interface de communication 16 du serveur 2, qui le transmet au processeur 12 pour être traitée.

Le processeur 12 du serveur 2 obtient la clé KSE propre à l'élément sécurisé 4, en s'aidant de la requête d'adhésion reçue. Toutefois, cette obtention est mise en œuvre autrement que par une transmission de la clé KSE propre à l'élément sécurisé 4 par l'objet 1 au serveur. Cette obtention est mise en œuvre au moyen des étapes suivantes.

Ont été préalablement mémorisées dans la mémoire 14 du serveur 2 une pluralité de clés d'élément sécurisé candidates KSE(1), ..., KSE(n). L'une d'entre elles est susceptible d'être égale à la clé KSE de l'élément sécurisé 4 de l'objet 1.

Le processeur 12 met en œuvre une boucle comprenant au moins une itération, chaque itération utilisant une des clés d'élément sécurisé candidates KSE(1), ..., KSE(n).

Une itération d'indice i comprend les étapes 208, 210, 212 suivantes.

Le processeur 12 applique la première fonction prédéterminée f à la première donnée (DevEUI, AppEUI ou DevNonce) contenue dans la requête d'adhésion reçue, et à la clé d'élément sécurisé candidate KSE(i) mémorisée par le serveur 2, de sorte à générer une clé de référence candidate AppKey(i) (étape 208).

Ensuite, le processeur 12 applique la deuxième fonction prédéterminée g à la deuxième donnée (DevEUI, AppEUI, ou DevNonce) qui a été reçue par le serveur dans la requête d'adhésion, et à la clé de référence candidate AppKey(i), de sorte à générer un code d'intégrité candidat MIC(i) associé à la clé de référence candidate AppKey(i) (étape 210).

Le processeur 12 compare ensuite le code d'intégrité candidat MIC(i) au code d'intégrité MIC contenu dans la requête d'adhésion reçue par le serveur 2 (étape 212).

Si les deux codes ne sont pas égaux, une nouvelle itération est mise en œuvre pour une clé d'élément sécurisé candidate suivante KSE(i+1). Les étapes 208, 210, 212 sont alors répétées sur la base de la clé KSE(i+1).

Si le processeur 12 met en œuvre n itérations et qu'il est constaté qu'aucun des codes d'intégrité candidats MIC(1), ..., MIC(n) n'est égal au code d'intégrité MIC reçu, alors la requête d'adhésion est rejetée par le serveur.

En revanche, si deux codes comparés MIC(i) et MIC sont égaux, alors cela signifie que la requête d'adhésion reçue par le serveur 2 provient bien d'un objet 1 agréé. Mais cela signifie également que la clé de référence candidate AppKey(i), ayant permis de générer le code d'intégrité candidat MIC(i), est égal à la clé AppKey détenue par l'objet 1, puisque l'objet 1 et le serveur ont chacun utilisé la même deuxième fonction prédéterminée g pour générer les deux codes d'intégrité comparés. Le processeur 12 du serveur 2 considère donc que la clé propre à l'élément sécurisé 4 est la clé AppKey(i).

En définitive, le processeur 12 sélectionne en tant que clé AppKey la clé de référence candidate ayant permis de générer un code d'intégrité candidat égal au code d'intégrité (MIC) relatif à la requête d'adhésion (étape 214).

De façon conventionnelle, le serveur 2 transmet à l'objet 1 un message de réponse « join-accept », lui indiquant que la requête d'adhésion a été acceptée par le serveur 2.

La clé de référence AppKey devient à ce stade une clé partagée entre l'objet 1 et le serveur 2.

Par la suite, la clé de référence AppKey partagée peut être utilisée conventionnellement pour dériver les clés de session NwkSKey, AppSKey pour crypter et authentifier des communications entre l'objet 1 et le serveur.

Bien entendu, le nombre maximal de calculs effectués par le serveur 2 pour récupérer la clé de référence AppKey au cours du procédé de partage qui précède est proportionnel au nombre n de clés candidates KSE(i) mémorisées par le serveur 2. Par conséquent, il est avantageusement mis les étapes additionnelles suivantes au cours du procédé, afin de réduire le nombre de calculs effectués en pratique par le serveur 2 pour récupérer cette clé de référence AppKey.

De retour à la figure 2, au cours de l'étape 100, le processeur 6 de l'objet 1 ou l'élément sécurisé 4 applique la troisième fonction prédéterminée h à l'identifiant unique (IDSE) de l'élément sécurisé 4 de l'objet 1 et à une donnée d'aléa ayant une valeur comprise dans un ensemble fini prédéterminé de m valeurs, de sorte à générer le DevNonce qui sera ensuite inclus dans la requête d'adhésion à transmettre au serveur.

La troisième fonction est par exemple la suivante :
*DevNonce = trunc*(*hash*(*IDSE, counter*))
où
- *counter* est la donnée d'aléa,
- *hash* désigne une fonction de hachage,
- *trunc* est une troncature qui ne conserve que 2 octets du résultat de la fonction de hachage.

De retour à la figure 3, une table de correspondance entre des identifiants uniques d'éléments sécurisé IDSE(1), ..., IDSE(n) et les clés d'éléments sécurisé KSE(1), ..., KSE(n) discutées précédemment a été préalablement mémorisée dans la mémoire 14 du serveur 2. Autrement dit, pour tout i allant de 1 à n, l'identifiant unique IDSE(i) et la clé KSE(i) se rapportent à un même élément sécurisé, et sont donc mis en correspondance dans la table de correspondance mémorisée dans la mémoire 14 du serveur 2.

Bien entendu, l'un des identifiants candidats IDSE(1), ..., IDSE(n) est susceptible d'être égal à l'identifiant unique IDSE mémorisé par l'élément sécurisé 4 de l'objet 1.

On suppose par ailleurs que le serveur connaît l'ensemble fini auquel appartient la donnée d'aléa.

Le processeur 12 du serveur 2 met en œuvre les étapes suivantes pour au moins un identifiant unique d'élément sécurisé candidat IDSE(i) d'indice i et pour au moins une valeur candidate de l'ensemble fini prédéterminé d'indice j.

Le processeur applique la troisième fonction prédéterminée h à l'identifiant candidat IDSE(i) et à la valeur candidate d'indice j, de sorte à générer un nonce candidat, que l'on nomme par convention DevNonce(i,j) (étape 200).

Le processeur compare le DevNonce reçu dans la requête d'adhésion avec chaque nonce candidat généré (202).

Si un nonce candidat généré DevNonce(i,j) est égal au DevNonce, alors le processeur 12 sélectionne la clé d'élément sécurisé KSE(i) associée, dans la table de correspondance, à l'identifiant unique d'élément sécurisé candidat IDSE(i) ayant servi à générer le nonce candidat DevNonce(i,j) (étape 204).

Si un nonce candidat généré DevNonce(i,j) est différent du DevNonce, alors le processeur 12 ne sélectionne pas, au cours de l'étape 204, la clé d'élément sécurisé KSE(i) associée, dans la table de correspondance, à l'identifiant unique d'élément sécurisé candidat IDSE(i) ayant servi à générer le nonce candidat DevNonce(i,j).

Le processeur répète par exemple les étapes 200, 202, 204 pour tout i allant de 1 à n, et pour tout élément de l'ensemble fini (de cardinal m).

Il est à noter que le nombre de clés d'éléments sécurisés candidats IDSE(i) sélectionné par le serveur peut être égal à 1, mais peut également être supérieur à 1. En effet, la troncature *trunc* de la troisième fonction h est susceptible de générer des collisions, c'est-à-dire produire des DevNonces(i,j) de même valeur à partir de données d'entrées de la troisième fonction pourtant différentes.

Les étapes 208, 210 et 212 sont ensuite mises en œuvre uniquement pour chaque clé d'élément sécurisé candidate sélectionnée au cours de l'étape 204.

Le calcul préalable 200 des nonces candidats permet ainsi de réaliser un pré-filtrage de clés d'éléments sécurisés KSE(i) candidates mémorisées dans la mémoire 14 du serveur 2, dont le nombre peut être extrêmement grand. Certes, les étapes additionnelles 200, 202, 204 de ce pré-filtrage induisent une charge de calcul supplémentaire ; toutefois, cette charge supplémentaire, relativement petite, est largement compensée par le fait que le nombre d'itérations faisant appel à la première fonction (dans l'étape 208) et à la deuxième fonction (dans l'étape 210) est fortement réduit. La charge de calcul globale consommée par le serveur pour obtenir la clé KSE de l'élément sécurisé 4 est donc en définitive fortement réduite grâce aux étapes 208, 210, 212.

Cette économie de charge de calcul est particulièrement avantageuse lorsque les calculs sont confiés à un module matériel de sécurité (« Hardware Security Module » en anglais, abrégé en HSM) ne disposant que de faibles ressources matérielles.

De plus, cette économie de charge de calcul est obtenue sans qu'il ait été besoin de modifier le format de la requête d'adhésion join-request. En effet, le nonce DevNonce, déjà imposé par la spécification LoRaWAN afin d'éviter des attaques par rejeu, est astucieusement calculé à partir d'une donnée caractéristique de l'élément sécurisé 4 (l'identifiant unique IDSE cet élément sécurisé), puis mis à profit par le serveur pour mettre en œuvre un pré-filtrage de clés KSE(i) pertinent côté serveur 2.

La donnée d'aléa utilisée pour calculer le DevNonce côté objet 1 est par exemple la valeur courante d'un compteur, et l'ensemble fini est constitué des entiers allant de 0 à m-1. Le compteur a donc m-1 comme valeur maximale. Le compteur est incrémenté par l'objet 1 à chaque fois que cet objet doit émettre une nouvelle requête d'adhésion (peu importe que cette requête soit acceptée ou non par le serveur). Le compteur est remis à zéro lorsqu'il a atteint sa valeur maximale m.

Le serveur 2 utilise également la valeur d'un deuxième compteur CO comme donnée d'entrée de la troisième fonction h pour générer un nonce candidat au cours de l'étape 200. Ce compteur est incrémenté par le serveur pour chaque mise en œuvre de l'étape 200. On note CO(i) la valeur du deuxième compteur au début du procédé.

Le premier compteur, côté objet 1, est incrémenté pour chaque nouvelle requête d'adhésion à émettre. Or, le serveur 2 n'est pas forcément au courant d'une telle émission, et il peut donc il y avoir une désynchronisation entre le premier compteur et le deuxième compteur. Il est dès lors avantageusement utilisé un écart prédéterminé Δ. Pour tout i allant de 1 à n, le serveur calcule Devnonce pour toutes les valeurs de compteur allant de C0(i) à C0(i)+ Δ. Il s'arrête dès qu'il trouve une valeur correcte.

Il est à noter que les étapes 200 à 214 peuvent être mises en œuvre par un seul et même serveur 2, ou bien peuvent être mises en œuvre par un ensemble de serveurs, chaque serveur ne mettant en œuvre qu'une partie des étapes. Par exemple, un premier serveur peut se charger de réaliser le pré-filtrage de clés (étapes 200, 202, 204), et un deuxième serveur mettre en œuvre les étapes 208 à 214.

D'autres manières d'obtenir la clé KSE côté serveur peuvent être mises en œuvre.

Dans un deuxième mode de réalisation, le serveur - ou un ensemble de serveurs - met en œuvre les étapes suivantes.

Ont été préalablement mémorisées dans la mémoire 14 du serveur 2 deux tables de correspondance :
- une première table de correspondance entre des valeurs possibles pour la première donnée (qui, on le rappelle, peut être DevEUI, AppEUI, ou DevNonce) et des identifiants de clés d'éléments sécurisés IDSE(1), ..., IDSE(n), et
- une deuxième table similaire à celle utilisée dans le premier mode de réalisation décrit au regard des figures 2 et 3, c'est-à-dire une table de correspondance entre des identifiants uniques d'éléments sécurisés IDSE(1), ..., IDSE(n) et des clés d'éléments sécurisés KSE(1), ..., KSE(n).

Le serveur identifie, dans la première table de correspondance, un identifiant d'élément sécurisé associé à la première donnée (DevEUI, AppEUI ou DevNonce) transmise dans la requête d'adhésion (join-request).

Le serveur identifie ensuite, dans la deuxième table de correspondance, une clé associée à l'identifiant unique d'élément sécurisé identifié dans la première table de correspondance. Cette clé est la clé KSE.

Le fait d'utiliser deux tables de correspondances apporte une certaine flexibilité de mise en œuvre. L'une des deux tables peut être mémorisée et parcourue par un premier serveur, et l'autre table être mémorisée et parcourue par un deuxième serveur différent du premier serveur ; en variante, les deux tables peuvent être mémorisées et parcourues par un seul et même serveur.

Il a été décrit précédemment un procédé de partage d'une clé de référence servant à dériver des clés de session pour crypter et authentifier des communications entre l'objet 1 et le serveur 2. Toutefois, la clé de référence peut avoir une destination différente. La clé de partage est par exemple une clé servant à partager une autre clé entre l'objet 1 et le serveur 2, cette autre clé ayant une destination prédéterminée. Le partage de l'autre clé peut comprendre le calcul d'une même valeur de clé côté objet 1 et côté serveur 2. En variante, au moins l'un de l'objet 1 et du serveur 2 peut connaître à l'avance la valeur de l'autre clé, mais ne pas savoir à l'avance que cette valeur a cette destination prédéterminée. Le partage de cette clé apporte la confirmation à l'entité connaissant à l'avance cette valeur doit être utilisée pour cette destination prédéterminée.

Par ailleurs, l'invention est également applicable à d'autres protocoles que celui défini dans la spécification LoRaWAN version 1. En particulier, la clé de référence peut être la clé nommée NwkKey dans la spécification LoRaWAN version 1.1.

## Revendications

1. Procédé de partage d'une clé de référence (AppKey) entre un objet (1) susceptible d'être connecté à un réseau d'objets connectés et au moins un serveur (2), le procédé comprenant des étapes de :
• application (102), par l'objet (1), d'une première fonction prédéterminée (f) à au moins une première donnée (DevEUI, AppEUI, DevNonce) et à une clé (KSE) propre à un élément sécurisé de l'objet (1), de sorte à générer la clé de référence (AppKey),
• transmission (108) au serveur (2) d'une requête d'adhésion (join-request) de l'objet (1) au réseau d'objets connectés, la requête d'adhésion (join-request) comprenant la première donnée (DevEUI, AppEUI, DevNonce), la clé (KSE) propre à l'élément sécurisé (4) n'étant en revanche pas transmise par l'objet (1) au serveur (2),
• génération, par le serveur (2), de la clé (KSE) propre à l'élément sécurisé (4) sur la base de la requête d'adhésion (join-request),
• application (208), par le serveur (2), de la première fonction prédéterminée (f) à la première donnée (DevEUI, AppEUI, DevNonce) et à la clé (KSE) obtenue par le serveur (2), de sorte à obtenir la clé de référence (AppKey).

2. Procédé selon la revendication 1, comprenant par ailleurs des étapes de :
• application (104), par l'objet (1), d'une deuxième fonction prédéterminée (g) à une deuxième donnée (DevEUI, AppEUI, DevNonce) et à la clé de référence (AppKey), de sorte à générer un code d'intégrité (MIC),
• transmission (108) au serveur (2) du code d'intégrité (MIC) généré,
et dans lequel la génération par le serveur (2) de la clé propre à l'élément sécurisé (4) comprend des étapes de :
• pour au moins une clé d'élément sécurisé candidate mémorisée par le serveur (2) :
c) application (208) de la première fonction prédéterminée (f) à la première donnée (DevEUI, AppEUI, DevNonce) transmise dans la requête d'adhésion (join-request) et à une clé d'élément sécurisé candidate mémorisée par le serveur (2), de sorte à générer une clé de référence candidate (AppKey(i)),
d) application (210) de la deuxième fonction prédéterminée (g) à la deuxième donnée (DevEUI, AppEUI, DevNonce) transmise dans la requête d'adhésion (join-request) et à la clé de référence candidate générée (AppKey(i)), de sorte à générer un code d'intégrité candidat (MIC(i)),
• sélection d'une clé de référence candidate ayant servi à générer un code d'intégrité candidat égal au code d'intégrité (MIC) relatif à la requête d'adhésion (join-request).

3. Procédé selon la revendication 2, comprenant en outre des étapes de
• application (100), par l'objet (1), d'une troisième fonction prédéterminée (h) à un identifiant unique (IDSE) de l'élément sécurisé (4) de l'objet (1) et à une donnée d'aléa (counter) ayant une valeur comprise dans un ensemble fini prédéterminé, de sorte à générer un nonce (DevNonce),
• transmission (108) du nonce (DevNonce) au serveur (2),
• pour au moins un identifiant unique d'élément sécurisé candidat et pour au moins une valeur candidate de l'ensemble fini prédéterminé, application (200) de la troisième fonction prédéterminée (h) à l'identifiant candidat et à la valeur candidate, de sorte à générer un nonce candidat,
• sélection (204) d'au moins une clé d'élément sécurisé candidate associée, dans une table de correspondance, à un identifiant candidat ayant servi à générer un nonce candidat égal au nonce transmis dans la requête d'adhésion (join-request), dans lequel l'étape a) est mise en œuvre uniquement pour chaque clé d'élément sécurisé candidate sélectionnée.

4. Procédé selon la revendication 3, dans lequel la donnée d'aléa est un compteur incrémenté par l'objet (1) pour chaque nouvelle requête d'adhésion.

5. Procédé selon l'une des revendications 3 et 4, dans lequel la troisième fonction (h) comprend une fonction de hachage prenant en entrée l'identifiant (IDSE) de l'élément sécurisé (4) de l'objet (1) et la donnée d'aléa (counter), suivie d'une troncature.

6. Procédé selon l'une des revendications 3 à 5, dans lequel le nonce est une donnée DevNonce conforme à la spécification LoRaWAN et/ou est incluse dans la requête d'adhésion.

7. Procédé selon la revendication 1, dans lequel la génération de la clé propre à l'élément sécurisé (4) par le serveur (2) comprend des étapes de :
• identification, dans une première table de correspondance, d'un identifiant d'élément sécurisé associé à la première donnée (DevEUI, AppEUI, DevNonce) transmise dans la requête d'adhésion (join-request),
• identification, dans une deuxième table de correspondance distincte de la première table de correspondance, d'une clé associée à l'identifiant unique d'élément sécurisé identifié dans la première table de correspondance.

8. Procédé selon l'une des revendications 1 à 7, dans lequel :
• la requête d'adhésion (join-request) est un message conforme à la spécification LoRaWAN, et/ou
• lequel la première donnée est ou dépend d'au moins une des données suivantes :
o un identifiant unique propre à l'objet (DevEUI),
o un identifiant d'application unique propre à un fournisseur d'application de l'objet (AppEUI),
o un nonce (DevNonce), et/ou
• la clé de référence sert à dériver des clés de session (NwkSKey, AppSKey) pour crypter et authentifier des communications entre l'objet (1) et le serveur (2) ou sert à partager une autre clé entre l'objet (1) et le serveur (2).

9. Système comprenant un objet (1) susceptible d'être connecté à un réseau d'objets connectés, et au moins un serveur (2), dans lequel l'objet (1) est configuré pour :
• appliquer une première fonction prédéterminée (f) à au moins une première donnée (DevEUI, AppEUI, DevNonce) et à une clé (KSE) propre à un élément sécurisé de l'objet (1), de sorte à générer la clé de référence (AppKey),
• transmettre au serveur (2) une requête d'adhésion (join-request) de l'objet (1) au réseau d'objets connectés, la requête d'adhésion (join-request) comprenant la première donnée (DevEUI, AppEUI, DevNonce), la clé (KSE) propre à l'élément sécurisé (4) n'étant en revanche pas transmise par l'objet (1) au serveur (2),
et dans lequel le serveur (2) est configuré pour :
• générer la clé (KSE) propre à l'élément sécurisé (4) sur la base de la requête d'adhésion (join-request),
• appliquer la première fonction prédéterminée (f) à la première donnée (DevEUI, AppEUI, DevNonce) et à la clé (KSE) obtenue par le serveur (2), de sorte à obtenir la clé de référence (AppKey).

## Patentansprüche

1. Verfahren zum Teilen eines Referenzschlüssels (AppKey) zwischen einem Objekt (1), das geeignet ist, an ein Netz von angeschlossenen Objekten angeschlossen zu sein, und wenigstens einem Server (2), wobei da Verfahren Schritte umfasst:
• Anwendung (102) einer ersten vorbestimmten Funktion auf wenigstens ein erstes Datenelement (DevEUI, AppEUI, DevNonce) und einen einem gesicherten Element des Objekts (1) eigenen Schlüssel (KSE) durch das Objekt (1) derart, dass der Referenzschlüssel (AppKey) erzeugt wird,
• Übertragung (108) Beitrittsanfrage (Join-Request) des Objekts (1) auf das Netz von angeschlossenen Objekten auf den Server (2), wobei die Beitrittsanfrage (Join-Request) das erste Datenelement (DevEUI, AppEUI, DevNonce) umfasst, wobei der dem gesicherten Element eigene Schlüssel (KSE) jedoch nicht von dem Objekt (1) auf den Server (2) übertragen wird,
• Erzeugen des dem gesicherten Element (4) eigenen Schlüssels (KSE) durch den Server (2) auf der Grundlage der Beitrittsanfrage (Join-Request),
• Anwendung (108) der ersten vorbestimmten Funktion (f) auf das erste Datenelement (DevEUI AppEUI DevNonce) und auf den vom Server (2) erhaltenen Schlüssel (KSE) durch den Server (2) derart, dass der Referenzschlüssel (AppKey) erhalten wird.

2. Verfahren gemäß Anspruch 1, umfassend im Übrigen Schritte zur:
• Anwendung (104) einer zweiten vorbestimmten Funktion (a) auf ein zweites Datenelement (DevEUI, AppEUI, DevNonce) und auf den Referenzschlüssel (AppKey) durch das Objekt (1) derart, dass ein Integritätscode (MIC) erzeugt wird,
• Übertragung (108) des erzeugten Integritätscodes (MIC) auf den Server (2)
und bei dem das Erzeugen des dem gesicherten Element (4) eigenen Schlüssels durch den Server Schritte umfasst:
• für wenigstens einen Kandidaten-Schlüssel eines gesicherten Elements, der vom Server (2) gespeichert wird:
c) Anwendung (208) der ersten vorbestimmten Funktion (f) auf das erste Datenelement (DevEUI, AppEUI, DevNonce), das bei der Beitrittsanfrage (Join-Request) angefragt wird, und auf einen Kandidaten-Schlüssel eines gesicherten Elements, der von dem Server (2) derart gespeichert wird, dass ein Kandidaten-Referenzschlüssel (AppKey(i)) erzeugt wird,
d) Anwendung (210) der zweiten vorbestimmten Funktion (g) auf das zweite Datenelement (DevEUI, AppEUI, DevNonce), das in der Beitrittsanfrage (Join-Request) übertragen wird, und auf den erzeugten Kandidaten-Referenzschlüssel (AppKey(i)) derart, dass ein Kandidaten-Integrationscode (MIC(i)) erzeugt wird,
• Auswahl eines Kandidaten-Referenzschlüssels, der zum Erzeugen eines Kandidaten-Integrationscodes gedient hat, der gleich dem Integrationscode (MIC) bezüglich der Beitrittsanfrage (Join-Request) ist.

3. Verfahren gemäß Anspruch 2, umfassend darüber hinaus Schritte zur:
• Anwendung (100) einer dritten vorbestimmten Funktion (h) auf eine einzigartige Kennung (IDSE) des gesicherten Elements (4) des Objekts (1) und auf ein Zufallsdatenelement (Counter), das einen Wert aufweist, der in einer vorbestimmten fertigen Gruppe inbegriffen ist, durch das Objekt (1), derart, dass ein Nonce (DevNonce) erzeugt wird,
• Übertragung (108) des Nonce (DevNonce) auf den Server (2),
• für wenigstens eine einzigartige Kennung eines gesicherten Kandidatenelements und für wenigstens einen Kandidatenwert der vorbestimmten fertigen Gruppe Anwendung (200) der dritten vorbestimmten Funktion (h) auf die Kandidatenkennung und auf den Kandidatenwert derart, dass ein Kandidaten-Nonce erzeugt wird,
• Auswahl (204) wenigstens eines zugeordneten Kandidatenschlüssels eines gesicherten Elements in einer entsprechenden Tabelle zu einer Kandidatenkennung, die zum Erzeugen eines Kandidaten-Nonce gedient hat, das gleich dem Nonce ist, der in der Beitrittsanfrage (Join-Request) übertragen wird, wobei bei dem der genannte Schritt a) nur für jeden ausgewählten Kandidatenschlüssel eines gesicherten Elements umgesetzt wird.

4. Verfahren gemäß Anspruch 3, bei dem das Zufallsdatenelement ein Zähler ist, der von dem Objekt (1) für jede neue Beitrittsanfrage inkrementiert wird.

5. Verfahren gemäß einem der Ansprüche 3 und 4, bei dem die dritte Funktion (h) eine Hash-Funktion umfasst, die am Eingang die Kennung (IDSE) des gesicherten Elements (4) des Objekts (1) und das Zufallsdatenelement (Counter), gefolgt von einem Abschneiden umfasst.

6. Verfahren gemäß einem der Ansprüche 3 bis 5, bei dem das Nonce ein Datenelement DevNonce gemäß der Spezifikation LoRaWAN ist und / oder in der Beitrittsanfrage eingeschlossen ist.

7. Verfahren gemäß Anspruch 1, bei dem das Erzeugen des dem gesicherten Element (4) eigenen Schlüssels durch den Server (2) Schritte umfasst zur:
• Identifikation einer gesicherten Elementkennung, die dem ersten Datenelement (DevEUI, AppEUI, DevNonce) zugeordnet ist, das in der Beitrittsanfrage (Join-Request) übertragen wird, in einer ersten Entsprechungstabelle,
• Identifikation eines Schlüssels, der der einzigartigen Kennung des gesicherten Datenelements zugeordnet ist, das in der ersten Entsprechungstabelle identifiziert wird, in einer zweiten Entsprechungstabelle, die von der ersten Entsprechungstabelle unterschiedlich ist.

8. Verfahren gemäß einem der Ansprüche 1 bis 7, bei dem:
• die Beitrittsanfrage (Join-Request) eine Nachricht ist, die der Spezifikation LoRaWAN entspricht, und / oder
• das erste Datenelement wenigstens einer der folgenden Datenelemente ist oder davon abhängt:
o eine dem Objekt (DevEUI) eigene einzigartige Kennung,
o eine einem Anwendungslieferant des Objekts (AppEUI) eigene einzigartige Anwendungskennung,
o ein Nonce (DevNonce) und / oder
• der Referenzschlüssel zum Ableiten der Session-Schlüssel (NwkSKey, AppSKey) zum Verschlüsseln und Authentifizieren der Kommunikationen zwischen dem Objekt (1) und dem Server (2) dient oder zum Teilen eines anderen Schlüssels zwischen dem Objekt (1) und dem Server (2) dient.

9. System, umfassend ein Objekt (1), das geeignet ist, an einem Netz von angeschlossenen Objekten und wenigstens einen Server (2) angeschlossen zu sein, bei dem das Objekt (1) ausgestaltet ist zum:
• Anwenden einer ersten vorbestimmten Funktion (f) auf wenigstens ein erstes Datenelement (DevEUI, AppEUI, DevNonce) und auf einen einem gesicherten Element des Objekts (1) eigenen Schlüssel (KSE) derart, dass der Referenzschlüssel (AppKey) erzeugt wird,
• Übertragen einer Beitrittsanfrage (Join-Request) des Objekts (1) auf das Netz von angeschlossenen Objekten auf den Server (2), wobei die Beitrittsanfrage (Join-Request) das erste Datenelement (DevEUI, AppEUI, DevNonce) umfasst, wobei der dem gesicherten Element (4) eigene Schlüssel (KSE) jedoch nicht von dem Objekt (1) auf den Server (2) übertragen wird,
und bei dem der Server ausgestaltet ist zum:
• Erzeugen des dem gesicherten Element (4) eigenen Schlüssels (KSE) auf der Grundlage der Beitrittsanfrage (Join-Request)
• Anwenden der ersten vorbestimmten Funktion (f) auf das erste Datenelement (DevEUI, AppEUI, DevNonce) und auf den von dem Server (2) erhaltenen Schlüssel (KSE) derart, dass der Referenzschlüssel (AppKey) erhalten wird.

## Claims

1. Method for sharing a reference key (AppKey) between an object (1) able to be connected to a network of connected objects and at least one server (2), the method comprising the steps of:
• applying (102), by the object (1), a predetermined first function (f) to at least one first piece of data (DevEUI, AppEUI, DevNonce) and to a key (KSE) specific to a secure element of the object (1), so as to generate the reference key (AppKey),
• transmitting (108) to the server (2) a join-request of the object (1) to the network of connected objects, the join-request comprising the first piece of data (DevEUI, AppEUI, DevNonce), the key (KSE) specific to the secure element (4) however not being transmitted by the object (1) to the server (2),
• generating, by the server (2), of the key (KSE) specific to the secure element (4) based on the join-request,
• applying (208), by the server (2), the predetermined first function (f) to the first piece of data (DevEUI, AppEUI, DevNonce) and to the key (KSE) obtained by the server (2), so as to obtain the reference key (AppKey).

2. Method according to claim 1, further comprising steps of:
• applying (104), by the object (1), a predetermined second function (g) to a second piece of data (DevEUI, AppEUI, DevNonce) and to the reference key (AppKey), so as to generate an integrity code (MIC),
• transmitting (108) to the server (2) the integrity code (MIC) generated,
and wherein the step of generating by the server (2) of the key specific to the secure element (4) comprises steps of:
• for at least one candidate secure element key memorised by the server (2):
c) applying (208) the predetermined first function (f) to the first piece of data (DevEUI, AppEUI, DevNonce) transmitted in the join-request and to a candidate secure element key memorised by the server (2) so as to generate a candidate reference key (AppKey(i)),
d) applying (210) the predetermined second function (g) to the second piece of data (DevEUI, AppEUI, DevNonce) transmitted in the join-request and to the generated candidate reference key (AppKey(i)) so as to generate a candidate integrity code (MIC(i)),
• selecting a candidate reference key that was used to generated a candidate integrity code equal to the integrity code (MIC) relative to the join-request.

3. Method according to claim 2, further comprising the steps of
• applying (100), by the object (1), a predetermined third function (h) to a unique identifier (IDSE) of the secure element (4) of the object (1) and to a random piece of data (counter) having a value comprised within a predefined finite set, so as to generate a nonce (DevNonce),
• transmitting (108) the nonce (DevNonce) to the server (2),
• for at least one unique identifier of a candidate secure element and for at least one candidate value of the predefined finite set, applying (200) the predetermined third function (h) to the candidate identifier and to the candidate value, so as to generate a candidate nonce,
• selecting (204) at least one candidate secure element key associated, in a table of correspondence, with a candidate identifier that was used to generate a candidate nonce equal to the nonce transmitted in the join-request, wherein the step a) is carried out only for each selected candidate secure element key.

4. Method according to claim 3, wherein the random piece of data is a counter incremented by the object (1) for each new join-request.

5. Method according to one of claims 3 and 4, wherein the third function (h) comprises a hash function that takes as input the identifier IDSE) of the secure element (4) of the object (1) and the random piece of data (counter), followed by a truncation.

6. Method according to one of claims 3 to 5, wherein the nonce is a piece of data DevNonce in accordance with the LoRaWAN specification and/or is included in the join-request.

7. Method according to claim 1, wherein the step of generating of the key specific to the secure element (4) by the server (2) comprises steps of:
• identifying, in a first table of correspondence, an identifier of a secure element associated with the first piece of data (DevEUI, AppEUI, DevNonce) transmitted in the join-request,
• identifying, in a second table of correspondence separate from the first table of correspondence, a key associated with the unique identifier of the identified secure element in the first table of correspondence.

8. Method according to one of claims 1 to 7, wherein:
• the join-request is a message in accordance with the LoRaWAN specification, and/or
• the first piece of data is or depends on at least one of the following pieces of data:
∘ a unique identifier specific to the object (DevEUI),
∘ a unique application identifier specific to an application supplier of the object (AppEUI),
∘ a nonce (DevNonce), and/or
• the reference key is used to derive session keys (NwkSKey, AppSKey) to encrypt and authenticate communications between the object (1) and the server (2) or is used to share another key between the object (1) and the server (2).

9. System comprising an object (1) able to be connected to a network of connected objects, and at least one server (2), wherein the object (1) is configured to:
• apply a predetermined first function (f) to at least one first piece of data (DevEUI, AppEUI, DevNonce) and to a key (KSE) specific to a secure element of the object (1), in such a way as to generate the reference key (AppKey),
• transmit to the server (2) a join-request of the object (1) to the network of connected objects, the join-request comprising the first piece of data (DevEUI, AppEUI, DevNonce), the key (KSE) specific to the secure element (4) however not being transmitted by the object (1) to the server (2),
and wherein the server (2) is configured to:
• generate the key (KSE) specific to the secure element (4) based on the join-request,
• apply the predetermined first function (f) to the first piece of data (DevEUI, AppEUI, DevNonce) and to the key (KSE) obtained by the server (2), in such a way as to obtain the reference key (AppKey).
